# EUROPÄISCHE PATENTSCHRIFT

(11) **EP 1 166 057 B1**
(45) Veröffentlichungstag und Bekanntmachung des Hinweises auf die Patenterteilung: **23.04.2003**
(21) Anmeldenummer: 01907548.0
(22) Anmeldetag: 21.02.2001
(51) Int. Cl.: G01G 19/393, B65G 47/14

(54) **KOMBINATIONSWAAGE**
COMBINATION SCALE
BALANCE UNIVERSELLE

(30) Priorität: 03.03.2000 DE 10010444
(43) Veröffentlichungstag der Anmeldung: 02.01.2002
(73) Patentinhaber: MULTIPOND WÄGETECHNIK GMBH, 84478 Waldkraiburg (DE)
(72) Erfinder: SCHMIDHUBER, Josef, 84559 Kraiburg (DE)
(74) Vertreter: Prüfer, Lutz H., Dipl.-Phys.
(86) Internationale Anmeldenummer: EP0101988
(87) Internationale Veröffentlichungsnummer: WO01065215

(56) Entgegenhaltungen:
- EP-A- 0 082 696
- US-A- 4 398 612
- US-A- 4 600 096
- US-A- 4 673 046

## Beschreibung

Die Erfindung betrifft eine Kombinationswaage.

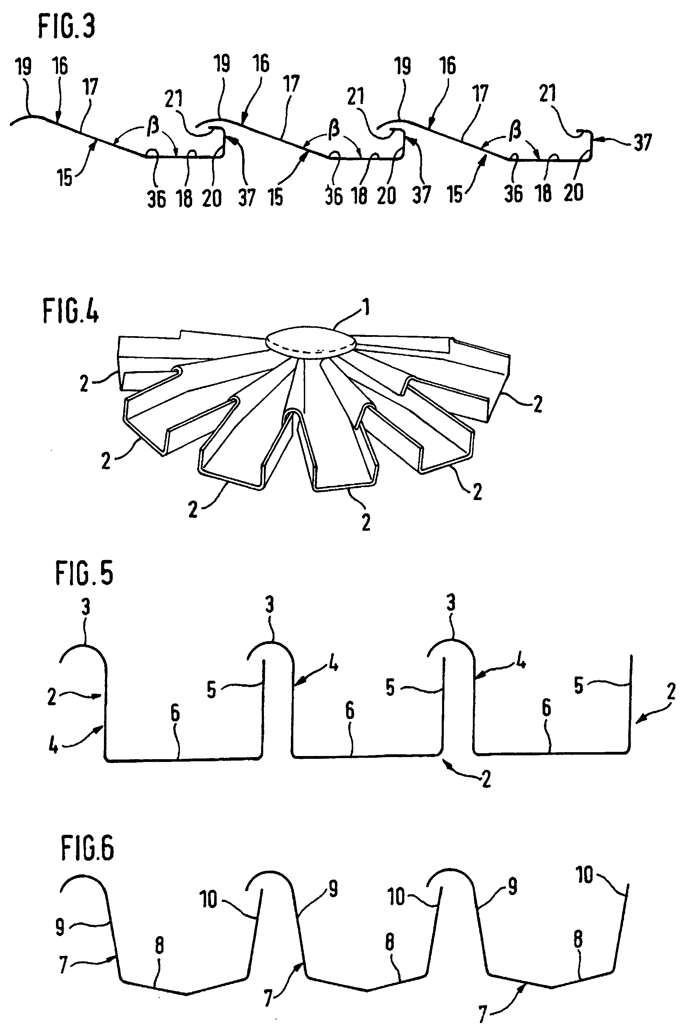

Bei einer aus EP 0 082 696 A2 bekannten Kombinationswaage sind, wie in Fig. 4 schematisch gezeigt ist, unterhalb einer zentralen Verteilervorrichtung 1 eine Mehrzahl von Förderrinnen 2 nebeneinander angeordnet, die die zu wiegenden Produkte von der Verteilervorrichtung 1 zu Wägebehältern fördern. Bei jeder Förderrinne 2 ist, wie in der schematischen Schnittansicht in Fig. 5 ersichtlich ist, die Oberkante 3 jeweils einer der Seitenwände 4, 5 so umgebogen, daß die angrenzende Seitenwand 5 der benachbarten Förderrinne 2 überlappt ist. Die Überlappung beginnt unterhalb des Randes der Verteilervorrichtung 1 und erstreckt sich über einen Teil der Länge der Förderrinne 2. Bei länglichen flexiblen Produkten, wie Spaghetti oder Bandnudeln im nassen Zustand oder geölten Gummischlangen, kann es dazu kommen, daß die Produkte von der Verteilervorrichtung 1 auf die Oberkante 3 gelangen und von nachdrängenden Produkten weiter nach außen auf der Oberkante 3 geschoben werden. Diese Produkte gleiten nicht zu dem Boden 6 der Förderrinne 2 und bleiben auf der Oberkante 3 der Seitenwand 4 hängen. Sie können auch nicht mehr durch die Vibration der Förderrinne 2 bewegt werden. Die gleiche Schwierigkeit tritt bei den in Fig. 6 gezeigten Förderrinnen 7 auf, die sich von den in Fig. 5 gezeigten Förderrinnen 2 dadurch unterscheiden, daß jeder Boden 8 eine Sicke aufweist und daß die Seitenwände 9, 10 sich nicht senkrecht zum Boden 8 erstrecken, sondern etwas zu der jeweils benachbarten Förderrinne 7 geneigt sind.

Aufgabe der Erfindung ist es, eine Kombinationswaage vorzusehen, bei der längliche flexible Produkte von der Verteilervorrichtung über die Zuführrinnen zuverlässig den Wägebehältern zugeführt werden können.

Die Aufgabe wird durch die Kombinationswaage des Anspruchs 1 gelöst.

Weiterbildungen der Erfindung sind in den abhangigen Ansprüchen angegeben.

Weitere Merkmale und Zweckmäßigkeiten der Erfindung ergeben sich aus der folgenden Beschreibung von Ausführungsformen der Erfindung anhand der Figuren. Von den Figuren zeigen:
- Fig. 1: eine Schnittansicht einer Kombinationswaage einer ersten Ausführungsform der Erfindung,
- Fig. 2: eine perspektivische Ansicht der Anordnung von Verteilervorrichtung, Förderrinnen und Bereitstellungsbehältern der in Fig. 1 gezeigten Kombinationswaage,
- Fig. 3: eine schematische Schnittansicht der Förderrinnen der in Fig. 1 gezeigten Kombinationswaage,
- Fig. 4: eine perspektivische Ansicht der Anordnung von Verteilervorrichtung und Förderrinnen einer bekannten Kombinationswaage,
- Fig. 5: eine schematische Schnittansicht der in Fig. 4 gezeigten Förderrinnen und
- Fig. 6: eine schematische Schnittansicht von anderen bekannten Förderrinnen.

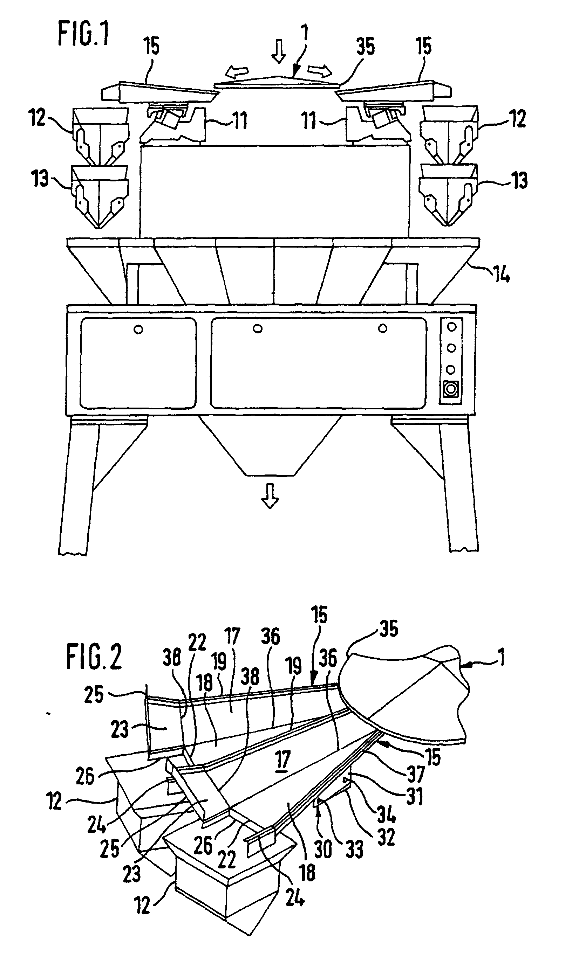

Die Kombinationswaage einer ersten Ausführungsform der vorliegenden Erfindung ist in Fig. 1 gezeigt. Sie enthält eine zentrale Verteilervorrichtung 1 mit einem Abgaberand 35, um die herum eine Mehrzahl von Förderrinnen (Zuführrinnen) 15 angeordnet sind, die jeweils mit einem Vibrationsmotor 11 verbunden sind. Unterhalb einem von der Verteilervorrichtung 1 abgewandten Ende jeder Förderrinnen 15 ist jeweils ein Bereitstellungsbehälter 12 und unterhalb von diesem ein Wägebehälter 13 angeordnet. Die Ausgabeöffnungen von allen Wägebehältern 13 münden in einen Trichter 14. Die Förderrinnen 15 sind so angeordnet, daß die der Verteilervorrichtung abgewandten Enden der Förderrinnen 15 auf einem Kreis liegen und daß die der Verteilervorrichtung 1 zugewandten Enden der Förderrinnen 15 unterhalb des Abgaberandes 35 der Verteilervorrichtung 1 liegen.

Wie am besten in Fig. 2 und 3 ersichtlich ist, weist jede Förderrinne 15 einen Boden 16 mit einer ersten Bodenfläche 17 und einer damit entlang einer ersten Kante 36 verbundenen zweiten Bodenfläche 18 auf. Die erste Bodenfläche 17 ist im wesentlichen rechteckig ausgebildet und weist einen zu der benachbarten Förderrinne 15 hin weisenden Randbereich 19 auf. Das der Verteilervorrichtung 1 zugewandte Ende der ersten Bodenfläche 17 ist unterhalb des Abgaberandes 35 der Verteilervorrichtung 1 angeordnet. Die zweite Bodenfläche 18 ist dreieckig ausgebildet, wobei sie zu der Verteilervorrichtung 1 hin spitz zuläuft und eine Ecke des Dreiecks unterhalb des Abgaberandes 35 der Verteilervorrichtung 1 angeordnet ist. Die dieser Ecke gegenüberliegende Seite des Dreiecks bildet ein vorderes Ende 22 der zweiten Bodenfläche 18, das oberhalb des Bereitstellungsbehälters 12 angeordnet ist. Die Breite dieses vorderen Endes 22 ist bevorzugt gleich zur Breite der Einfüllöffnung des Bereitstellungsbehälters 12 gewählt. Die erste und die zweite Bodenfläche 17, 18 weisen zu der Verteilervorrichtung 1 hin und sind entlang der ersten Kante gegeneinander geneigt. Die beiden Bodenflächen 17, 18 schließen einen Winkel β von 150°bis 170° ein, bevorzugt beträgt der Winkel β 160°. Die beiden Bodenflächen 17, 18 sind flach und die zweite Bodenfläche 18 ist im Querschnitt horizontal angeordnet.

Die zweite Bodenfläche 18 weist, wie am besten aus Fig. 3 ersichtlich ist, einen Rand (Seitenrand) 37 auf. Der Rand 37 weist einen ersten Abschnitt 20 mit einer vorgegebenen Höhe, der sich von der zweiten Bodenfläche 18 nach oben erstreckt, und einen daran anschließenden zweiten Abschnitt 21, der zur zweiten Bodenfläche 18 hin gebogen ist, auf. Die vorgegebene Höhe des ersten Abschnitts 20 ist so gewählt, daß sie größer ist als die maximale Höhe von im Betrieb der Förderrinnen übereinander liegenden Produkten. Der erste Abschnitt 20 erstreckt sich bevorzugt senkrecht zur zweiten Bodenfläche 18, und der zweite Abschnitt 21 erstreckt sich bevorzugt senkrecht zum ersten Abschnitt 20.

Wie in Fig. 3 ersichtlich ist, überlappt der Randbereich 19 der ersten Bodenfläche 17 den Rand 37 der zweiten Bodenfläche 18 der benachbarten Förderrinne 15 und ist zur zweiten Bodenfläche 18 der benachbarten Förderrinne 15 hin gekrümmt. Der Krümmungsradius des Randbereichs 19 ist möglichst groß gewählt, damit der Randbereichs 19 nicht als eckige Kante ausgebildet ist. Aufgrund der flachen Neigung der ersten Bodenfläche 17 kann der Randbereich 19 mit einem großen Krümmungsradius gebildet werden, ohne daß an dem Übergang der ersten Bodenfläche 17 zum Randbereich 19 ein Knick bzw. eine Kante gebildet wird. Da der Randbereich 19 ohne Knicke oder Kanten gebildet ist, werden auf dem Randbereich keine länglichen flexiblen Produkte hängen bleiben. Der Randbereich 19 ist derart ausgebildet, daß er sich von der Verteilervorrichtung 1 über die gesamte Länge der benachbarten Zuführrinne 15 erstreckt. Wesentlich ist, daß die Überlappung durch den Randbereich 19 unterhalb des Abgaberandes 35 der Verteilervorrichtung 1 beginnt, damit keine Produkte zwischen die Zuführrinnen 15 fallen.

Wie aus Fig. 2 ersichtlich ist, ist die Länge der zweiten Bodenfläche 18 in Längsrichtung der Zuführrinne 15 so gewählt, daß das von der Verteilervorrichtung 1 abgewandte vordere Ende 22 der zweiten Bodenfläche 18 oberhalb der Einfüllöffnung des Bereitstellungsbehälters 12 angeordnet ist. Bevorzugt ist die Länge der zweiten Bodenfläche 18 so gewählt, daß das vordere Ende 22 oberhalb eines hinteren Randes des zugeordneten Bereitstellungsbehälters 12 liegt, wobei der hintere Rand der Rand ist, der den geringsten Abstand zur Verteilervorrichtung 1 aufweist. Die Länge der ersten Bodenfläche 17 und des Randes 37 in Längsrichtung der Zuführrinne 15 ist so gewählt, daß sie größer ist als die Länge der zweiten Bodenfläche 18 und daß die von der Verteilervorrichtung 1 abgewandten Enden der ersten Bodenfläche 17 und des Randes 37 oberhalb der Einfüllöffnung des Bereitstellungsbehälters 12 angeordnet sind. Bevorzugt erstrecken sich die erste Bodenfläche 17 und der Rand 37 bis zur Mitte der Einfüllöffnung des Bereitstellungsbehälters 12. Wie in Fig. 2 ersichtlich ist, ist ein erster Endabschnitt 23 der ersten Bodenfläche 17 an dem von der Verteilervorrichtung 1 abgewandten Ende der ersten Bodenfläche 17 entlang einer zweiten Kante 38, die etwa auf Höhe des vorderes Endes 22 der ersten Bodenfläche quer zur Längsrichtung der Zuführrinne 15 verläuft, nach oben geneigt. An dem von der Verteilervorrichtung 1 abgewandten vorderen Rand des ersten Endabschnitts 23 ist eine sich nach oben und quer zur Längsrichtung der Zuführrinne 15 erstreckende Begrenzungswand 25 vorgesehen, die verhindert, daß die Produkte über den vorderen Rand des ersten Endabschnitts 23 neben den Bereitstellungsbehälter 12 fallen. Ein zweiter Endabschnitt 24 des der Verteilervorrichtung abgewandten Endes des Randes 37 ist auf Höhe des vorderen Endes 22 der zweiten Bodenfläche 18 nach oben geneigt. Die beiden Endabschnitte 23, 24 und das vordere Ende 22 der zweiten Bodenfläche 18 begrenzen in der Draufsicht gesehen einen U-förmige Rand. Von diesem U-förmigen Rand erstreckt sich nach unten in Richtung zum Bereitstellungsbehälter 12 hin eine Führungswand 26.

Etwa in der Mitte jeder Zuführrinne 15 ist, wie in Fig. 2 gezeigt ist, an der Unterseite des Bodens 16 eine Verbindungsvorrichtung 30 zum Verbinden der Zuführrinne 15 mit dem Vibrationsmotor 11 vorgesehen. Die Verbindungsvorrichtung 30 enthält ein fest an der Unterseite des Bodens 16 angebrachtes Rinnenverbindungselement 31 und ein an dem Vibrationsmotor 11 (der in Fig. 2 nicht gezeigt ist) angebrachtes Vibrationsmotorverbindungselement 32. Das Rinnenverbindungselement 31 weist zwei erste Löcher 33 und zwei davon in Längsrichtung der Zuführrinne 15 beabstandete zweite Löcher 34 auf, von denen in Fig. 2 jeweils nur eins gezeigt ist. Die zweiten Löcher 34 sind als Langlöcher ausgebildet. In dem Vibrationsmotorverbindungselement 32 sind zwei dritte und zwei vierte Löcher (nicht gezeigt) an den den ersten und zweiten Löchern 33, 34 entsprechenden Positionen gebildet. Das Rinnenverbindungselement 31 und das Vibrationsmotorverbindungselement 32 sind mittels Schrauben in den Löchern 33, 34 miteinander verbunden. Da die zweiten Löcher 34 als Langlöcher ausgebildet sind, kann die Neigung der Zuführrinne 15 auf einen gewünschten Wert eingestellt werden.

Im Betrieb werden die zu wiegenden Produkte von der Verteilervorrichtung 1 den Zuführrinnen 15 zugeführt, wie dies durch die Pfeile in Fig. 1 angedeutet ist, wobei die Produkte hauptsächlich der ersten Bodenfläche 17 aber auch der zweiten Bodenfläche 18 jeder Zuführrinne 15 zugeführt werden. Die Zuführrinnen 15 werden durch die Vibrationsmotoren 11 in Schwingung versetzt und fördern die Produkte chargenweise in die Bereitstellungsbehälter 12. Diese übergeben die Produktchargen den Wägebehältern 13, in denen die Produktchargen zur Ermittlung der bestmöglichen Kombination gewogen werden und dann aus den entsprechend ausgewählten Wägebehältern 13 nach unten in den Trichter 14 abgegeben werden. Bei der Förderung der Produkte in den Zuführrinnen 15 wird ein Teil der Produkte von der ersten Bodenfläche 17 auf die zweite Bodenfläche 18 und dann zu dem vorderen Ende 22 der zweiten Bodenfläche 18 gefördert und fällt in den Bereitstellungsbehälter 12. Der restliche Teil der Produkte wird auf der ersten Bodenfläche 17 und dem Randbereich 19 von der Verteilervorrichtung 1 zu dem Bereitstellungsbehälter 12 gefördert. Durch die Neigung der ersten Bodenfläche 17 und des ersten Endabschnitts 23 hin zur zweiten Bodenfläche 18 und durch die Neigung des ersten Endabschnitts 23 nach oben zur Verteilervorrichtung 1 werden die Produkte auf dem ersten Endabschnitt 23 in Richtung zur Öffnung des Bereitstellungsbehälters 12 hin beschleunigt und dadurch in den Bereitstellungsbehälter 12 gefördert. Die Begrenzungswand 25 verhindert, daß die Produkte von dem ersten Endabschnitt 23 neben den Bereitstellungsbehälter 12 fallen. Wenn Produkte auf dem Randbereich 19 hängen bleiben, werden sie entweder durch die auf der ersten Bodenfläche 17 geförderten Produkte in Richtung zu der benachbarten Zuführrinne 15 hin geschoben und fallen in der benachbarten Zuführrinne 15 auf die zweite Bodenfläche 18 und werden dort weitergefördert oder sie verhaken sich mit den auf der ersten Bodenfläche 17 geförderten Produkten und werden dadurch in der Zuführrinne 15 weitergefördert. Da der Randbereich 19 den Rand 37 der benachbarten Zuführrinne 15 vollständig überlappt, wird sichergestellt, daß die über die erste Bodenfläche 17 hinübergeschobenen Produkte nicht zwischen die Zuführrinnen 15 fallen. Ferner verhindert der Rand 37 mit dem ersten und zweiten Abschnitt 20, 21, daß die Produkte in der Zuführrinne 15 auf der Seite des Rands 37 hinausgeschoben werden und zwischen die Zuführrinnen 15 fallen. Der erste und zweite Endabschnitt 23 und 24 verhindern, daß die Produkte an dem von der Verteilervorrichtung 1 wegweisenden Ende der Zuführrinne 15 seitlich an dem Bereitstellungsbehälter 12 vorbeifallen, da sie sich weiter über die Öffnung des Bereitstellungsbehälters 12 erstrekken als das vordere Ende der zweiten Bodenfläche 18 und so eine seitliche Begrenzung bilden. Die Neigung der Zuführrinnen 15 kann durch die Verbindungsvorrichtung 30 verändert werden und wird daran angepaßt, wie leicht die Produkte gefördert werden können. Je leichter die Produkte gefördert werden können, um so geringer wird die Neigung eingestellt.

## Patentansprüche

1. Kombinationswaage mit
einer Verteilervorrichtung (1) zum Verteilen von zu wiegenden Produkten und
einer Mehrzahl von nebeneinander angeordneten Zuführrinnen (15) zum Zuführen der Produkte von der Verteilervorrichtung (1) zu Wägebehältern (13),
wobei jede Zuführrinne (15) einen Boden (16) mit einer ersten Bodenfläche (17) und einer damit entlang einer ersten Kante (36) verbundenen zweiten Bodenfläche (18) aufweist, die zu der Verteilervorrichtung (1) hin weisen und entlang der ersten Kante (36) gegeneinander geneigt sind,
wobei die zweite Bodenfläche (18) durch die erste Kante (36) und einen Seitenrand (37), die in Richtung zu der Verteilervorrichtung (1) hin konvergieren, seitlich begrenzt ist, **dadurch gekennzeichnet, daß**
ein Randbereich (19) der ersten Bodenfläche (17) einer Zuführrinne (15) jeweils den Seitenrand (37) einer dazu benachbarten Zuführrinne (15) überlappt.

2. Kombinationswaage nach Anspruch 1, bei der
die zweite Bodenfläche (18) im Querschnitt horizontal angeordnet ist.

3. Kombinationswaage nach Anspruch 1 oder 2, bei der
der Randbereich (19) der ersten Bodenfläche (17) zum Boden (16) der benachbarten Zuführrinne (15) hin gekrümmt ist.

4. Kombinationswaage nach einem der Ansprüche 1 bis 3, bei der die erste Bodenfläche (17) in Längsrichtung der Zuführrinne (15) eine Länge aufweist, die größer ist als die Länge der zweiten Bodenfläche (18) in der Längsrichtung.

5. Kombinationswaage nach einem der Ansprüche 1 bis 4, bei der an dem der Verteilervorrichtung (1) abgewandten Ende der ersten Bodenfläche (17) eine sich quer zur Längsrichtung der Zuführrinne (15) erstreckende Begrenzungswand (25) vorgesehen ist.

6. Kombinationswaage nach einem der Ansprüche 1 bis 5, bei der der Seitenrand (37) in Längsrichtung der Zuführrinne (15) eine Länge aufweist, die größer ist als die Länge der zweiten Bodenfläche (18) in der Längsrichtung.

7. Kombinationswaage nach einem der Ansprüche 1 bis 6, bei der der Seitenrand (37) sich über eine vorgegebene Länge erstreckt und einen zur zweiten Bodenfläche (17) hin abgekanteten Abschnitt (21) aufweist.

8. Kombinationswaage nach einem der Ansprüche 1 bis 7, bei der beide Bodenflächen (17, 18) einen Winkel von 150° bis 170° einschließen.

9. Kombinationswaage nach einem der Ansprüche 1 bis 8, bei der die Zuführrinnen (15) um die Verteilervorrichtung (1) herum angeordnet sind.

10. Kombinationswaage nach einem der Ansprüche 1 bis 9, bei der
die Neigung der Zuführrinnen (15) in ihrer Längsrichtung verstellbar ist.

11. Kombinationswaage nach einem der Ansprüche 1 bis 10, bei der
ein erster Endabschnitt (23) der ersten Bodenfläche (17) an dem der Verteilervorrichtung (1) abgewandten Ende der ersten Bodenfläche (17) entlang einer quer zur Längsrichtung der Förderrinne verlaufenden zweiten Kante (38) gegenüber der ersten Bodenfläche (17) geneigt ist.

12. Kombinationswaage nach einem der Ansprüche 1 bis 11, bei der
ein zweiter Endabschnitt (24) des Seitenrandes (37) an dem der Verteilervorrichtung (1) abgewandten Ende des Seitenrandes (37) entlang einer quer zur Längsrichtung der Förderrinne verlaufenden dritten Kante gegenüber der zweiten Bodenfläche (18) geneigt ist.

13. Kombinationswaage nach einem der Ansprüche 1 bis 12, bei der die erste Bodenfläche (17) im wesentlichen rechteckig ausgebildet ist.

## Claims

1. Combinatorial weighing apparatus having
a dispersing device (1) for the distribution of products to be weighed and
a plurality of supply troughs (15) arranged alongside one another for feeding the products from the dispersing device (1) to the weighing containers (13),
each supply trough (15) having a base (16) with a first base area (17) and a second base area (18) connected thereto along a first edge (36) which point towards the dispersing device (1) and are inclined to one another along the first edge (36),
wherein the second base area (18) is bounded laterally by the first edge (36) and a side edge (37) which converge in the direction towards the dispersing device (1), **characterised in that**
an edge region (19) of the first base area (17) of a supply trough (15) in each case overlaps the side edge (37) of a supply trough (15) adjacent thereto.

2. Combinatorial weighing apparatus according to Claim 1, in which the second base area (18) in cross-section is arranged horizontally.

3. Combinatorial weighing apparatus according to Claim 1 or 2, in which the edge region (19) of the first base area (17) is curved towards the base (16) of the neighbouring supply trough (15).

4. Combinatorial weighing apparatus according to one of Claims 1 to 3, in which the first base area (17) in the longitudinal direction of the supply trough (15) has a length which is greater than the length of the second base area (18) in the longitudinal direction.

5. Combinatorial weighing apparatus according to one of Claims 1 to 4, in which at the end of the first base area (17) facing away from the dispersing device (1) a boundary wall (25) extending transversely to the longitudinal direction of the supply trough (15) is provided.

6. Combinatorial weighing apparatus according to one of Claims 1 to 5, in which in the longitudinal direction of the supply trough (15) the side edge (37) has a length which is greater than the length of the second base area (18) in the longitudinal direction.

7. Combinatorial weighing apparatus according to one of Claims 1 to 6, in which the side edge (37) extends over a predetermined length and has a section (21) bevelled off towards a second base area (17).

8. Combinatorial weighing apparatus according to one of Claims 1 to 7, in which both base areas (17, 18) enclose an angle of 150° to 170°.

9. Combinatorial weighing apparatus according to one of Claims 1 to 8, in which the supply troughs (15) are arranged around the dispersing device (1).

10. Combinatorial weighing apparatus according to one of Claims 1 to 9, in which the inclination of the supply troughs (15) is adjustable in their longitudinal direction.

11. Combinatorial weighing apparatus according to one of Claims 1 to 10, in which a first end section (23) of the first base area (17) at the end of the first base area (17) facing away from the dispersing device (1) is inclined relative to the first base area (17) along a second edge (38) running transversely to the longitudinal direction of the conveyor trough.

12. Combinatorial weighing apparatus according to one of Claims 1 to 11, in which a second end section (24) of the side edge (37) on the end of the side edge (37) facing away from the dispersing device (1) is inclined relative to the second base area (18) along a third edge running transversely to the longitudinal direction of the conveyor trough.

13. Combinatorial weighing apparatus according to one of Claims 1 to 12, in which the first base area (17) is of substantially rectangular construction.

## Revendications

1. Balance universelle, comportant
un dispositif distributeur (1) pour distribuer des produits à peser et
plusieurs canaux d'alimentation juxtaposés (15) pour amener les produits du dispositif distributeur (1) à des récipients de balance (13),
dans laquelle chaque canal d'alimentation (15) comporte un fond (16) avec une première surface de fond (17) et avec une deuxième surface de fond (18) reliée à la première le long d'une première arête (36), lesquelles surfaces de fond sont dirigées vers le dispositif distributeur (1) et sont inclinées l'une par rapport à l'autre le long de la première arête (36),
et dans laquelle la deuxième surface de fond (18) est limitée latéralement par la première arête (36) et par un bord latéral (37) qui convergent en direction du dispositif distributeur (1),
**caractérisée en ce qu'**une zone marginale (19) de la première surface de fond (17) d'un canal d'alimentation (15) chevauche à chaque fois le bord latéral (37) d'un canal d'alimentation (15) voisin.

2. Balance universelle selon la revendication 1, dans laquelle la deuxième surface de fond (18) est disposée horizontalement en section transversale.

3. Balance universelle selon la revendication 1 ou 2, dans laquelle la zone marginale (19) de la première surface de fond (17) est recourbée en direction du fond (16) du canal d'alimentation (15) voisin.

4. Balance universelle selon l'une des revendications 1 à 3, dans laquelle la première surface de fond (17) a, dans le sens de la longueur du canal d'alimentation (15), une longueur qui est supérieure à la longueur de la deuxième surface de fond (18) dans le sens de la longueur.

5. Balance universelle selon l'une des revendications 1 à 4, dans laquelle il est prévu à l'extrémité, éloignée du dispositif distributeur (1), de la première surface de fond (17) une paroi de limitation (25) s'étendant transversalement au sens de la longueur du canal d'alimentation (15).

6. Balance universelle selon l'une des revendications 1 à 5, dans laquelle le bord latéral (37) a, dans le sens de la longueur du canal d'alimentation (15), une longueur qui est supérieure à la longueur de la deuxième surface de fond (18) dans le sens de la longueur.

7. Balance universelle selon l'une des revendications 1 à 6, dans laquelle le bord latéral (37) s'étend sur une longueur prédéterminée et a un tronçon (21) replié en direction de la première surface de fond (17).

8. Balance universelle selon l'une des revendications 1 à 7, dans laquelle les deux surfaces de fond (17, 18) forment un angle de 150° à 170°.

9. Balance universelle selon l'une des revendications 1 à 8, dans laquelle les canaux d'alimentation (15) sont disposés autour du dispositif distributeur (1).

10. Balance universelle selon l'une des revendications 1 à 9, dans laquelle l'inclinaison des canaux d'alimentation (15) est réglable dans le sens de leur longueur.

11. Balance universelle selon l'une des revendications 1 à 10, dans laquelle, par rapport à la première surface de fond (17), un premier tronçon terminal (23) de la première surface de fond (17) est incliné à l'extrémité, éloignée du dispositif distributeur (1), de la première surface de fond (17) et le long d'une deuxième arête (38) s'étendant transversalement au sens de la longueur du canal d'alimentation.

12. Balance universelle selon l'une des revendications 1 à 11, dans laquelle, par rapport à la deuxième surface de fond (18), un deuxième tronçon terminal (24) du bord latéral (37) est incliné à l'extrémité, éloignée du dispositif distributeur (1), du bord latéral (37) et le long d'une troisième arête s'étendant transversalement au sens de la longueur du canal d'alimentation.

13. Balance universelle selon l'une des revendications 1 à 12, dans laquelle la première surface de fond (17) est conçue sensiblement rectangulaire.
